(19) Europäisches Patentamt
European Patent Office
Office européen des brevets

(11) **EP 2 695 863 A1**

(12) **EUROPEAN PATENT APPLICATION**
published in accordance with Art. 153(4) EPC

(43) Date of publication:
**12.02.2014 Bulletin 2014/07**

(51) Int Cl.:
***C03B 25/04*** *(2006.01)*  ***C03B 18/02*** *(2006.01)*
***C03C 3/085*** *(2006.01)*  ***C03C 3/087*** *(2006.01)*
***C03C 3/091*** *(2006.01)*  ***C03C 3/093*** *(2006.01)*

(21) Application number: **12768420.7**

(22) Date of filing: **03.04.2012**

(86) International application number:
**PCT/JP2012/059088**

(87) International publication number:
**WO 2012/137780 (11.10.2012 Gazette 2012/41)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **08.04.2011 JP 2011086078**

(71) Applicant: **Asahi Glass Company, Limited Tokyo 100-8405 (JP)**

(72) Inventors:
• **TSUJIMURA Tomoyuki**
  **Tokyo 100-8405 (JP)**
• **NISHIZAWA Manabu**
  **Tokyo 100-8405 (JP)**
• **HIGUCHI Nobuhiko**
  **Tokyo 100-8405 (JP)**

(74) Representative: **Müller-Boré & Partner Patentanwälte PartG mbB Grafinger Straße 2 81671 München (DE)**

(54) **NON-ALKALI GLASS FOR SUBSTRATES AND PROCESS FOR MANUFACTURING NON-ALKALI GLASS FOR SUBSTRATES**

(57) According to the present invention, an alkali-free glass for a substrate, having a thickness of 0.1 mm to 0.3 mm and a compaction of 9 ppm or lower can be obtained without performing heat treatment as a post-treatment for the alkali-free glass for a substrate after production (after forming, annealing and cutting).

## Description

TECHNICAL FIELD

The present invention relates to an alkali-free glass for a substrate which is suitable as various kinds of glass substrates for a display and as a glass substrate for a photomask, has a thin thickness, and has an extremely low compaction, and relates to a method for producing the alkali-free glass for a substrate.

BACKGROUND OF THE INVENTION

Conventionally, an alkali-free glass has been used since film characteristics are deteriorated due to the diffusion of alkali metal ions into the thin film in the case where various kinds of glass substrates for a display, in particular, those on which a thin film of a metal, an oxide and the like is formed, are used.

In addition, in the case where a glass is exposed to a high-temperature environment in a thin film-forming step, in order to minimize changes in size caused by the deformation of the glass and the structural stabilization of the glass, it is required that the compaction (C) of the glass is extremely low, specifically, that the compaction (C) of the glass is 9 ppm or lower.

In addition, due to the demand for a reduction in the weight of a display, a reduction in the thickness of a glass substrate has been recently required. Specifically, the thickness has been required to be 0.1 mm to 0.3 mm.

Various kinds of glass substrates for a display can be obtained by float forming and fusion forming. However, when a glass substrate having a thickness of 0.1 mm to 0.3 mm is formed, it is necessary that the drawing amount of a glass ribbon from a forming apparatus (hereinafter, in this specification, simply referred to as "drawing amount") increase for the following reasons.

(1) When a glass substrate having a thickness of 0.1 mm to 0.3 mm is formed, it is necessary that the temperature in forming is higher than that in the case where a thicker glass substrate is formed. When the drawing amount is low, the base temperature in a forming apparatus (in the case of float forming, the base temperature of a float bath) is reduced, and sensible heat supplied from a molten glass to a forming apparatus is reduced. Therefore, since there is a concern that it is difficult to form a glass substrate, it is necessary to increase the drawing amount.

(2) When a glass substrate having a thickness of 0.1 mm to 0.3 mm is formed, if the drawing amount is low, there is a concern that a glass ribbon drawn from a forming apparatus may be bent due to the influence of gravity. Therefore, it is necessary to increase the drawing amount.

Incidentally, a glass ribbon drawn from a forming apparatus can be prevented from being bent by reducing the feed amount of a molten glass to the forming apparatus instead of increasing the drawing amount. However, in this case, the feed amount of raw materials to a dissolution bath is reduced, and the change in the feed amount of raw materials is not preferable from the viewpoint of stably running the dissolution bath.

In addition, when the feed amount of a molten glass to a forming apparatus is reduced, sensible heat supplied from the molten glass to the forming apparatus is reduced, whereby there is a concern that it is difficult to form a glass substrate.

(3) In the case of float forming, when the drawing amount is low, the contact time between a molten glass and a molten tin in a float bath increases. Therefore, there is a concern that the molten tin may permeate a lower surface of the glass ribbon. When tin permeates the lower surface of the glass ribbon, the transmittance of a produced glass substrate deteriorates, which is not preferable. Therefore, it is necessary to increase the drawing amount.

Incidentally, the more the thickness of a glass substrate is thin, the more the permeation of tin influences on the transmittance. Therefore, problems arise particularly when a glass substrate having a thickness of 0.1 mm to 0.3 mm is formed.

(4) In the case of float forming, when the drawing amount is low, the retention time of a glass ribbon in a float bath increases. Therefore, there is a concern that tin defects on an upper surface of the glass ribbon may be increased by the float bath. That is, there is a concern that the attachment of condensates of tin components, evaporated from a molten tin, onto the upper surface of the glass ribbon may be increased. Therefore, it is necessary to increase the drawing amount.

Incidentally, tin defects caused by a float bath can be removed by polishing. However, when a glass substrate has a thickness of 0.1 mm to 0.3 mm, there is a concern that a sufficient polishing margin for removing the tin defects may not be obtained.

However, when the drawing amount increases, the cooling rate in an annealing process increases and thus, the compaction (C) of a produced glass substrate tends to increase. When a glass substrate having a thickness of 0.1 mm to 0.3 mm is produced, the drawing amount is required to be 250 m/h or higher, preferably 300 m/h or higher and more preferably 350 m/h or higher. With such a drawing amount, it is difficult to control the compaction (C) of a produced glass substrate to be 9 ppm or lower.

Patent Document 1 discloses a method in which a glass sheet after production is heat-treated under predetermined temperature conditions and the glass sheet is cooled under predetermined conditions to reduce the thermal shrinkage of the glass sheet, that is, the compaction. However, in the method disclosed in Patent Document 1, since a glass after production is heat-treated as a post-treatment, the number of steps for obtaining a glass substrate as a final product increases, the yield of the glass substrate deteriorates, and facilities for performing heat treatment are required. In addition, the method is also not preferable from the viewpoint of energy required for heat treatment.

BACKGROUND ART DOCUMENT

PATENT DOCUMENT

Patent Document 1: JP-A-9-278464

SUMMARY OF THE INVENTION

PROBLEMS THAT THE INVENTION IS TO SOLVE

In order to solve the above-described technical problems of the related art, an object of the present invention is to provide an alkali-free glass for a substrate, having a thin thickness and an extremely low compaction, and a method for producing an alkali-free glass for a substrate.

MEANS FOR SOLVING THE PROBLEMS

In order to solve the above-mentioned object, the invention provides a method for producing an alkali-free glass for a substrate, the alkali-free glass comprising, as represented by mass% on the basis of oxides, as a glass matrix composition:

SiO$_2$: 50% to 66%,
Al$_2$O$_3$: 10.5% to 24%,
B$_2$O$_3$: 0% to 12%,
MgO: 0% to 8%,
CaO: 0% to 14.5%,
SrO: 0% to 24%,
BaO: 0% to 13.5%,
provided that MgO+CaO+SrO+BaO is 9% to 29.5%, and
ZrO$_2$: 0% to 5%,
having a compaction (C) of 9 ppm or lower, and having a thickness of 0.1 mm to 0.3 mm, the method comprising:

a melting step of melting glass raw materials to obtain a molten glass;
a forming step of forming the molten glass obtained in the melting step, into a sheet-shaped glass ribbon; and
an annealing process of annealing the glass ribbon formed in the forming step,
wherein a drawing amount of the glass ribbon in the forming step is 250 m/h or higher, and when a β-OH value (mm$^{-1}$) of an alkali-free glass for a substrate to be produced is represented by W and an average cooling rate (°C/min) of the glass ribbon in a temperature range from (an annealing point of the alkali-free glass for a substrate to be produced in the annealing process +50°C) to 450°C is represented by V, the W and the V are adjusted so as to satisfy the following expression (1):

$$W \leq aV+b \qquad (1)$$

(in the expression (1), a and b satisfy the following expressions (2) and (3), respectively:

$$a=-0.0002Y-0.0007 \qquad (2);$$

and

$$b=0.0335Y+0.1894 \qquad (3),$$

in the expressions (2) and (3), 0<Y≤9).

ADVANTAGE OF THE INVENTION

According to the present invention, an alkali-free glass for a substrate having a thickness of 0.1 mm to 0.3 mm and a compaction of 9 ppm or lower can be obtained without performing heat treatment as a post-treatment for the alkali-free glass for a substrate after production (after forming, annealing and cutting).
The alkali-free glass for a substrate produced with the method according to the present invention has no concern that alkali metal ions may be diffused in the thin film, and film characteristics deteriorate when a thin film of a metal, an oxide and the like is formed on a glass surface in the process of manufacturing various displays using the alkali-free glass for a substrate.
The alkali-free glass for a substrate produced with the method according to the present invention has an extremely low compaction of 9 ppm or lower. Therefore, when the glass is exposed to a high-temperature environment in a thin film forming step which is performed in the process of manufacturing various displays using the alkali-free glass for a substrate, changes in size caused by the deformation and the structural stabilization of the glass can be minimized.
For these reasons, the alkali-free glass produced with the method according to the present invention is suitable as various kinds of glass substrates for a display.
In addition, the alkali-free glass for a substrate produced with the method according to the present invention is a thin sheet having a thickness of 0.1 mm to 0.3 mm and thus is suitable as glass substrates for a display which requires a reduction in weight.

The alkali-free glass for a substrate produced with the method according to the present invention can be used in applications other than glass substrates for a display. For example, the alkali-free glass for a substrate can be used for photomask glass substrates.

BRIEF DESCRIPTION OF THE DRAWINGS

[Fig. 1] Fig. 1 is a graph in which a relationship between an average cooling rate (V) in an annealing range and a $\beta$-OH value (W) of a glass is plotted.
[Fig. 2] Fig. 2 is a graph which is used for specifying an expression (2).
[Fig. 3] Fig. 3 is a graph which is used for specifying an expression (3).

MODE FOR CARRYING OUT THE INVENTION

Hereinbelow, a method for producing an alkali-free glass for a substrate according to the present invention will be described.

First, a composition of an alkali-free glass for a substrate to be produced in the method according to the present invention (hereinbelow, referred to as "alkali-free glass for a substrate according to the present invention") will be described.

An alkali-free glass for a substrate of the present invention comprises, as represented by mass% on the basis of oxides (mass%), as a glass matrix composition:

$SiO_2$: 50% to 66%,
$Al_2O_3$: 10.5% to 24%,
$B_2O_3$: 0% to 12%,
MgO: 0% to 8%,
CaO: 0% to 14.5%,
SrO: 0% to 24%,
BaO: 0% to 13.5%,
provided that MgO+CaO+SrO+BaO is 9% to 29.5%, and
$ZrO_2$: 0% to 5%.

Next, the composition range of each component will be described.

By controlling a content of $SiO_2$ to be 50 mass% or more (hereinbelow, simply referred to as "%"), a strain point of the glass substrate is improved, chemical resistance is improved, and a thermal expansion coefficient is reduced. By controlling the content of $SiO_2$ to be 66% or less, the melting performance of glass raw materials during melting is improved and devitrification characteristics are improved.

The content of $SiO_2$ can be appropriately selected from the above-described range according to the demand required for the alkali-free glass for a substrate. In an alkali-free glass for a substrate which requires a low strain point of the alkali-free glass for a substrate, specifically, a strain point of 720°C or lower (hereinafter, in this specification, referred to as "first embodiment of the alkali-free glass for a substrate"), the content of $SiO_2$ is controlled to 58% to 66%.

Meanwhile, in the case where easy melting performance is required when glass raw materials are melted to obtain a molten glass, a temperature at which a viscosity $\eta$ is $10^2$ poise (dPa·s) (hereinbelow, referred to as "$T_2$") is required to be low and $T_2$ is preferably 1540°C or lower. In an alkali-free glass for a substrate which requires a $T_2$ value of 1540°C or lower (hereinafter, in this specification, referred to as "second embodiment of the alkali-free glass for a substrate"), the content of $SiO_2$ is controlled to 50% to 61.5%.

By controlling a content of $Al_2O_3$ to be 10.5% or more, the phase separation of the alkali-free glass for a substrate is suppressed, a thermal expansion coefficient is reduced, and a strain point is improved. In addition, by controlling the content of $Al_2O_3$ to be 24% or less, the melting performance of glass raw materials during melting is improved.

The content of $Al_2O_3$ can be appropriately selected from the above-described range according to the demand required for the alkali-free glass for a substrate. In the case of the first embodiment of the alkali-free glass for a substrate, the content of $Al_2O_3$ is controlled to 15% to 24%. On the other hand, in the case of the second embodiment of the alkali-free glass for a substrate, the content of $Al_2O_3$ is controlled to 10.5% to 18%.

A glass substrate for a display is required to have sufficient chemical resistance to various chemicals used for forming a semiconductor, in particular, is required to have resistance to buffered hydrogen fluoride (BHF) for etching of $SiO_x$ or $SiN_x$.

$B_2O_3$ can be included in order to suppress the cloudiness of the alkali-free glass for a substrate caused by BHF and to reduce the thermal expansion coefficient and the density of the alkali-free glass for a substrate without increasing the viscosity at a high temperature. By controlling the content of $B_2O_3$ to be 12% or less, both the acid resistance and the strain point of the alkali-free glass for a substrate are improved.

The content of $B_2O_3$ can be appropriately selected from the above-described range according to the demand required for the alkali-free glass for a substrate. In the first embodiment of the alkali-free glass for a substrate, the content of $B_2O_3$ is preferably 5% to 12% because the BHF resistance of the alkali-free glass for a substrate is superior. In the second embodiment of the alkali-free glass for a substrate, the content of $B_2O_3$ is preferably 7% to 10% because the BHF resistance of the alkali-free glass for a substrate is superior, and both the acid resistance and the strain point of the alkali-free glass for a substrate are improved.

MgO suppresses an increase in the thermal expansion coefficient and density of the alkali-free glass for a substrate, whereby the melting performance of glass raw materials during melting is improved.

By controlling a content of MgO to be 8% or less, cloudiness by BHF is suppressed and the phase separation of the alkali-free glass for a substrate is suppressed.

The content of MgO can be appropriately selected from the above-described range according to the demand required for the alkali-free glass for a substrate. In the case of the first embodiment of the alkali-free glass for a substrate, the content of MgO is preferably 8% or less. On the other hand, in the case of the second embodiment of the alkali-free glass for a substrate, the content of MgO is preferably controlled to 2% to 5%.

CaO improves the melting performance of glass raw materials during melting.

By controlling a content of CaO to be 14.5% or less, the thermal expansion coefficient of the alkali-free glass for a substrate is reduced and devitrification characteristics are improved.

The content of CaO can be appropriately selected from the above-described range according to the demand required for the alkali-free glass for a substrate. In the case of the first embodiment of the alkali-free glass for a substrate, the content of CaO is preferably 9% or less. On the other hand, the case of the second embodiment of the alkali-free glass for a substrate, the content of CaO is preferably 14.5% or less.

Since SrO exerts the effect of suppressing the phase separation of the alkali-free glass for a substrate and the effect of suppressing the cloudiness of the alkali-free glass for a substrate by BHF, 24% or less of SrO can be contained.

The content of SrO can be appropriately selected from the above-described range according to the demand required for the alkali-free glass for a substrate. In the first embodiment of the alkali-free glass for a substrate, the content of SrO is controlled to 3% to 12.5%, whereby the phase separation of the alkali-free glass for a substrate is suppressed and the cloudiness of the alkali-free glass for a substrate by BHF is suppressed. In addition, the thermal expansion coefficient of the alkali-free glass for a substrate is reduced. On the other hand, in the case of the second embodiment of the alkali-free glass for a substrate, 24% or less of SrO can be contained.

BaO suppresses the phase separation of the alkali-free glass for a substrate, improves the melting performance of glass raw materials during melting and improves devitrification characteristics.

By controlling the content of BaO to be 13.5% or less, the density of the alkali-free glass for a substrate is reduced and the thermal expansion coefficient is reduced.

The content of BaO can be appropriately selected from the above-described range according to the demand required for the alkali-free glass for a substrate.

In the case of the first embodiment of the alkali-free glass for a substrate, 2% or less of BaO can be contained. On the other hand, in the case of the second embodiment of the alkali-free glass for a substrate, 13.5% or less of BaO can be contained.

By controlling a total content of MgO, CaO, SrO, and BaO (that is, MgO+CaO+SrO+BaO) to be 9% or more, the melting performance of glass raw materials during melting is improved. By controlling the content of MgO+CaO+SrO+BaO to be 29.5% or less, the density of the alkali-free glass for a substrate is reduced.

The content of MgO+CaO+SrO+BaO can be appropriately selected from the above-described range according to the demand required for the alkali-free glass for a substrate. In the case of first embodiment of the alkali-free glass for a substrate, the content is controlled to be 9% to 18%. On the other hand, in the case of the second embodiment of the alkali-free glass for a substrate, the content is controlled to be 16% to 29.5%.

5% or less of $ZrO_2$ may be included in order to reduce a glass melting temperature. When the content of $ZrO_2$ is greater than 5%, the glass is unstable or the dielectric constant "$\varepsilon$" of the glass increases. The content of $ZrO_2$ is preferably 3% or less, more preferably 2% or less, and still more preferably 1.5% or less.

The first embodiment of the alkali-free glass for a substrate of the present invention comprises, as represented by mass% on the basis of oxides, as a glass matrix composition:

$SiO_2$: 58% to 66%,
$Al_2O_3$: 15% to 24%,
$B_2O_3$: 5% to 12%,
MgO: 0% to 8%,
CaO: 0% to 9%,
SrO: 3% to 12.5%, and
BaO: 0% to 2%,
provided that MgO+CaO+SrO+BaO is 9% to 18%.

The second embodiment of the alkali-free glass for a substrate of the present invention comprises, as represented by mass% on the basis of oxides, as a glass matrix composition:

$SiO_2$: 50% to 61.5%,
$Al_2O_3$: 10.5% to 18%,
$B_2O_3$: 7% to 10%,
MgO: 2% to 5%,
CaO: 0% to 14.5%,
SrO: 0% to 24%, and
BaO: 0% to 13.5%,
provided that MgO+CaO+SrO+BaO is 16% to 29.5%.

In order to improve melting performance, refining and formability, the alkali-free glass for a substrate according to the present invention may include a total content of 5% or less of ZnO, $Fe_2O_3$, $SO_3$, F, Cl, and

$SnO_2$ other than the above-mentioned components. In addition, since many steps are required for treating cullet, it is preferred that PbO, $As_2O_3$, and $Sb_2O_3$ are not contained except that PbO, $As_2O_3$, and $Sb_2O_3$ are unavoidably contained as impurities and the like (that is, not substantially contained).

Next, physical properties of the alkali-free glass for a substrate according to the present invention will be described.

The alkali-free glass for a substrate according to the present invention has an extremely low compaction.

The compaction refers to the glass thermal shrinkage caused by the relaxation of a glass structure during heating treatment. In the present invention, the compaction (C) refers to the shrinkage ratio (ppm) of an indentation gap distance when two indentations are provided at a predetermined gap on a surface of an alkali-free glass for a substrate obtained by undergoing a melting step, a forming step, and an annealing process; and the alkali-free glass for a substrate is heated to 450°C, is left to stand for 1 hour, and then is cooled to room temperature at 100°C/hour.

The compaction (C) in the present invention can be measured with the following method.

A surface of the alkali-free glass for a substrate subjected to the melting step, the forming step, and the annealing process is polished to obtain a 200 mmx20 mm sample. Two point-like indentations are provided on the surface of the sample at a gap A (A=190 mm) in a long side direction of the sample.

Next, the sample is heated to 450°C at a temperature rise rate of 100°C/h (=1.6°C/min), is left to stand at 450°C for 1 hour, and is cooled to room temperature at a temperature fall rate of 100°C/h. In addition, an indentation gap distance is measured once again, and the distance is set to B. The compaction (C) is calculated from A and B obtained as above according to the following expression. A and B are measured using an optical microscope.

$$C \text{ (ppm)}=(A-B)/A \times 10^6$$

In the alkali-free glass for a substrate according to the present invention, the compaction (C) is 9 ppm or lower, preferably 8 ppm or lower, and more preferably 7 ppm or lower.

In the alkali-free glass for a substrate according to the present invention, the strain point is 600°C to 720°C.

By controlling the strain point to be in the above-described range, the melting performance and refining of the glass are secured; and the deformation of the glass can be suppressed when the glass is exposed to a high-temperature environment in the thin film forming step.

In the first embodiment of the alkali-free glass for a substrate according to the present invention, the strain point is 630°C to 720°C, preferably 630°C to 700°C, and more preferably 630°C to 690°C.

In the first embodiment of the alkali-free glass for a substrate according to the present invention, by controlling the strain point to be within the above-described range, the melting performance and refining of the glass are secured; and the deformation of the glass can be suppressed when the glass is exposed to a high-temperature environment particularly in the thin film forming step.

In the second embodiment of the alkali-free glass for a substrate according to the present invention, the strain point is 600°C to 650°C, preferably 600°C to 640°C.

In the second embodiment of the alkali-free glass for a substrate according to the present invention, by controlling the strain point to be within the above-described range, particularly, the melting performance and refining of the glass are secured; and the deformation of the glass can be suppressed when the glass is exposed to a high-temperature environment in the thin film forming step.

In the alkali-free glass for a substrate according to the present invention, the temperature $T_2$ at which the viscosity $\eta$ is $10^2$ poise (dPa·s) is 1700°C or lower; and the melting performance of the glass during melting is superior.

In the first embodiment of the alkali-free glass for a substrate according to the present invention, $T_2$ is 1680°C or lower, preferably 1670°C or lower; and the melting performance of the glass during melting is superior.

In the second embodiment of the alkali-free glass for a substrate according to the present invention, $T_2$ is 1540°C or lower, preferably 1530°C or lower; and the melting performance of the glass during melting is particularly superior.

In the alkali-free glass for a substrate according to the present invention, a temperature $T_4$ at which the viscosity $\eta$ is $10^4$ poise (dPa·s) is 1300°C or lower. Therefore, the glass substrate is suitable for float forming and fusing forming.

In the first embodiment of the alkali-free glass for a substrate according to the present invention, $T_4$ is 1300°C or lower and preferably 1290°C or lower.

In the second embodiment of the alkali-free glass for a substrate according to the present invention, $T_4$ is 1190°C or lower and preferably 1170°C or lower.

In the alkali-free glass for a substrate according to the present invention, a thickness of the glass is 0.1 mm to 0.3 mm.

A method for producing an alkali-free glass for a substrate according to the present invention includes a melting step, a forming step, and an annealing process. Each step of the production method will be described below.

Melting step

In the melting step, glass raw materials are melted to obtain a molten glass. In the melting step, raw materials are prepared so as to obtain a composition of an alkali-free glass for a substrate to be produced, and the raw materials are continuously put into a dissolution bath and are heated to be approximately 1450°C to 1650°C to obtain a molten glass.

Although the details are described below, in the method for producing an alkali-free glass for a substrate according to the present invention, a β-OH value of an alkali-free glass for a substrate to be produced; and a cooling rate of a glass ribbon in the annealing process are adjusted so as to satisfy a predetermined relationship. As a result, an alkali-free glass for a substrate having a compaction (C) of 9 ppm or lower is obtained.

The β-OH value is used as an index of the water content in the alkali-free glass for a substrate to be produced and can be adjusted according to various conditions in the melting step, for example, the water content in the glass raw materials, the vapor concentration in the dissolution bath, and the retention time of the molten glass in the dissolution bath.

Moreover, as a method for adjusting the water content in the glass raw materials, there is a method for using a hydroxide as a glass raw material instead of an oxide (for example, magnesium hydroxide ($Mg(OH)_2$) is used as a magnesium source instead of magnesium oxide ($MgO$)).

As a method for adjusting the vapor concentration in the dissolution bath, there is a method for using oxygen; or a method for using mixed gas of oxygen and air, instead of using air for burning fuel such as utility gas and heavy oil in order to heat the dissolution bath.

The β-OH value of the alkali-free glass for a substrate produced with the method according to the present invention is preferably 0.5 $mm^{-1}$ or less, more preferably 0.4 $mm^{-1}$ or less, still more preferably 0.3 $mm^{-1}$ or less, and particularly preferably 0.25 $mm^{-1}$ or less.

Forming step

In the forming step, the molten glass obtained in the melting step is formed into a sheet-shaped glass ribbon. More specifically, a glass ribbon having a predetermined thickness, specifically, a thickness of 0.1 mm to 0.3 mm is formed with a float process or a fusion process.

In the forming step, in order to form the glass ribbon having a thickness of 0.1 mm to 0.3 mm, the drawing amount of the glass ribbon is controlled to be 250 m/h or higher, preferably 300 m/h or higher, and more preferably 350 m/h or higher.

When the drawing amount of the glass ribbon in the forming step is in the above-described range, the base temperature in a forming apparatus (in the case of float forming, the base temperature of a float bath) is not reduced; and sensible heat supplied from molten glass to a forming apparatus is not reduced. Therefore, there is no concern that a glass substrate may be difficult to form.

In addition, there is no concern that a glass ribbon drawn from a forming apparatus may be bent.

In addition, during forming using a float process, permeation of tin to a lower surface of a glass ribbon is low; and an alkali-free glass for a substrate having superior light transmittance can be obtained.

In addition, during forming using a float process, tin defects which are attached on an upper surface of a glass ribbon caused by a float bath are reduced.

Annealing process

In the annealing process, the sheet-shaped glass ribbon obtained in the forming step is annealed.

In the method for producing an alkali-free glass for a substrate according to the present invention, when a cooling rate of the glass ribbon in the annealing process, specifically, an average cooling rate (°C/min) of the glass ribbon in a temperature range of from (an annealing point of the alkali-free glass for a substrate to be produced +50°C) to 450°C (hereinbelow, in this specification, referred to as "average cooling rate of the glass ribbon in the annealing range") is represented by V; and the β-OH value ($mm^{-1}$) of the glass substrate to be produced is represented by W, the V and W are adjusted so as to satisfy the following expression (1),

$$W \leq aV + b \qquad (1).$$

In the expression (1), a and b satisfy the following expressions (2) and (3), respectively:

$$a = -0.0002Y - 0.0007 \qquad (2);$$

and

$$b = 0.0335Y + 0.1894 \qquad (3).$$

In the expressions (2) and (3), $0 < Y \leq 9$.

As described below in Working Examples, the inventors of the present application produced an alkali-free glass for a substrate having a thickness of 0.3 mm from an alkali glass; and measured the compaction (C) of the produced alkali-free glass for a substrate while changing the average cooling rate (V) of the glass ribbon in the annealing range; and the β-OH value (W) of the alkali-free glass for a substrate to be produced.

As a result, it was found that there was a linear correlation between the average cooling rate (V) of the glass ribbon in the annealing range and the β-OH value (W) of the alkali-free glass for a substrate to be produced; and an alkali-free glass for a substrate produced from an alkali-free glass, having a thickness of 0.1 mm to 0.3 mm and a compaction (C) of 9 ppm or lower, could be obtained by adjusting the average cooling rate (V) of the glass ribbon in the annealing range and the β-OH value (W) of the alkali-free glass for a substrate to be produced, specifically, by adjusting the average cooling rate (V) of the glass ribbon in the annealing range and the β-OH value (W) of the alkali-free glass for a substrate to be produced so as to satisfy the expression (1).

Incidentally, in Working Examples described below, results in the case where an alkali-free glass for a substrate having a thickness of 0.3 mm is produced, are shown. However, in the case where the thickness is in a range of 0.1 mm to 0.3 mm, the influence of a difference in the thickness of the alkali-free glass for a substrate on the compaction (C) is negligible. Therefore, it is obvious that, even when the thickness is other than 0.3 mm, the same results can be obtained.

In the expression (1), the range of the β-OH value (W) of the alkali-free glass to be produced is as described above.

Regarding the alkali-free glass for a substrate according to the present invention, the annealing point of the alkali-free glass for a substrate to be produced, which is defined in the annealing range is 650°C to 770°C.

In addition, in the first embodiment of the alkali-free glass for a substrate according to the present invention, the annealing point is 680°C to 750°C and preferably 680°C to 740°C.

In addition, in the second embodiment of the alkali-free glass for a substrate according to the present invention, the annealing point is 650°C to 700°C and preferably 650°C to 690°C.

In addition, regarding the alkali-free glass for a substrate according to the present invention, the average cooling rate (V) of the glass ribbon in the annealing range is preferably 100°C/min or less, more preferably 90°C/min or less, and still more preferably 80°C/min or less.

In the expressions (2) and (3), Y can be appropriately selected from the above-described range according to the target value of the compaction (C) of the alkali-free glass for a substrate to be produced.

For example, Y in the expressions (2) and (3) is set to 9; a and b obtained from the Y value is put into the expression (1), and V and W are adjusted so as to satisfy the expression (1). As a result, an alkali-free glass for a substrate having a thickness of 0.1 mm to 0.3 mm and a compaction (C) of 9 ppm or lower can be obtained.

With the same procedure, by setting Y in the expressions (2) and (3) to 8, 7, 6, and the like, the alkali-free glass for a substrate having a compaction (C) of 8 ppm or lower, 7 ppm or lower, 6 ppm or lower and the like can be obtained.

For example, specific procedures for adjusting the average cooling rate (V) of the glass ribbon in the annealing range and the β-OH value (W) of the alkali-free glass for a substrate to be produced so as to satisfy the expression (1), are as follows.

When the β-OH value (W) of the alkali-free glass for a substrate to be produced is specified in advance from the composition of the glass raw materials used in the melting step (for example, use of a hydroxide as a glass raw material); and fuel combustion conditions for heating the dissolution bath (for example, a method for using oxygen or mixed gas of oxygen and air for fuel combustion), there is a method for adjusting the average cooling rate (V) of the glass ribbon in the annealing range with respect to the specified β-OH value (W) so as to satisfy the expression (1).

In addition, in the case where the average cooling rate (V) of the glass ribbon in the annealing range cannot be changed due to, for example, the restriction of an annealing furnace used in the annealing process, there is a method for adjusting the β-OH value (W) of the alkali-free glass for a substrate to be produced with respect to the average cooling rate (V) of the glass ribbon in the annealing range so as to satisfy the expression (1). In this case, the β-OH value (W) of the alkali-free glass for a substrate to be produced can be adjusted by changing the composition of the glass raw materials used in the melting step; and the fuel combustion conditions for heating the dissolution bath.

In the annealing process, after the temperature of the glass ribbon reaches 450°C, the average cooling rate of the glass ribbon is not limited to the expression (1). For example, the glass ribbon may be cooled to room temperature at an average cooling rate of 65°C/min, preferably 55°C/min, and more preferably 45°C/min. Then, by cutting the glass ribbon into a desired size, the alkali-free glass for a substrate according to the present invention can be obtained.

EXAMPLES

Raw materials of the respective components were mixed to obtain the following target composition and were melted in a platinum crucible at a temperature of 1500°C to 1600°C. During melting, stirring was performed using a platinum stirrer to homogenize the glass. Next, the molten glass was caused to flow and was formed into a sheet shape having a thickness of 0.3 mm, followed by annealing. Regarding glass samples cooled to room temperature, the β-OH value and the compaction (C) of the glass were measured with the following procedure.

Incidentally, plural glass samples having different β-OH values (W) of the glass and different average cooling rates (V) of the glass in the annealing range (annealing point (725°C) +50°C to 450°C) were prepared with the above-described procedure, except that the vapor atmosphere during the melting of the glass raw materials; and annealing conditions were changed.

[Target Composition of Glass (mass%)]

| | |
|---|---|
| $SiO_2$ | 60% |
| $Al_2O_3$ | 17% |
| $B_2O_3$ | 8% |
| MgO | 3.2% |
| CaO | 4.0% |
| SrO | 7.6%, and |
| BaO | 0.1%, |
| provided that MgO+CaO+SrO+BaO | 14.9% |

β-OH value: Absorbance to light having a wavelength of from 2.75 to 2.95 μm was measured, and the maximum value $β_{max}$ was divided by a thickness (mm) of the sample..

Compaction (C): Measured by the above-described method for measuring the compaction (C).

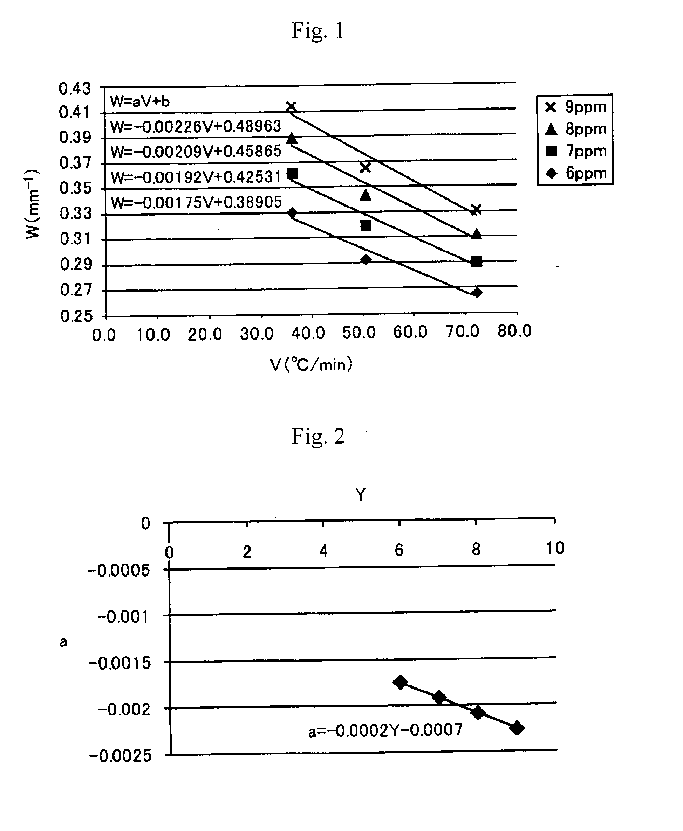

Fig. 1 is a graph in which a relationship between the β-OH value (W) of the glass and the average cooling rate (V) of the glass in the annealing range is plotted.

As clearly seen from Fig. 1, the linear correlation represented by W=aV+b is satisfied between the average cooling rate (V) in the annealing range of the glass and the β-OH value (W) of the glass to be produced. In addition, in the case where the compaction (C) of the glass represented by the correlation W=aV+b is represented by Cx, the compaction (C) of a glass produced under conditions satisfying W≤aV+b is Cx or lower.

In Fig. 1, in a glass having a compaction (C) of 9 ppm, the correlation expression is represented by W=-0.00226V+0.48963; and the compaction (C) of a glass produced under conditions satisfying W≤-0.00226V+0.48963 is 9 ppm or lower. This point is clarified from the results of glasses having a compaction (C) of 8 ppm, 7 ppm, and 6 ppm.

Next, it was attempted that a and b in W=aV+b were specified from the results of Fig. 1.

Fig. 2 is a graph in which a relationship between the compaction (C) of the glass and a in W=aV+b is plotted. In this case, the horizontal axis of the graph represents Y instead of the compaction (C) of the glass.

As clearly seen from Fig. 2, a relationship of a=-0.0002Y-0.0007 is satisfied.

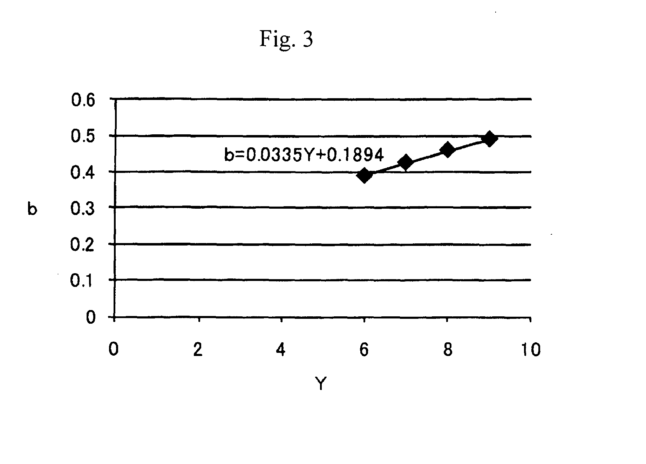

Fig. 3 is a graph in which a relationship between the compaction (C) of the glass and b in W=aV+b is plotted. In this case, the horizontal axis of the graph represents Y instead of the compaction (C) of the glass.

As clearly seen from Fig. 3, a relationship of b=0.0335Y+0.1894 is satisfied.

By selecting Y in these expressions according to the target value of the compaction (C) of the glass to be produced, a and b in W=aV+b can be specified.

While the present invention has been described in detail with reference to specific embodiments thereof, it will be apparent to one skilled in the art that various changes and modifications can be made therein without departing from the spirit and scope thereof.

Incidentally, the present application is based on Japanese Patent Application No. 2011-086078 filed on April 8, 2011 and the contents are incorporated herein by reference.

**Claims**

1. A method for producing an alkali-free glass for a substrate, the alkali-free glass comprising, as represented by mass% on the basis of oxides, as a glass matrix composition:

    $SiO_2$: 50% to 66%,
    $Al_2O_3$: 10.5% to 24%,
    $B_2O_3$: 0% to 12%,
    MgO: 0% to 8%,
    CaO: 0% to 14.5%,
    SrO: 0% to 24%,
    BaO: 0% to 13.5%,
    provided that MgO+CaO+SrO+BaO is 9% to 29.5%, and
    $ZrO_2$: 0% to 5%,
    having a compaction (C) of 9 ppm or lower, and having a thickness of 0.1 mm to 0.3 mm, the method comprising:

      a melting step of melting glass raw materials to obtain a molten glass;
      a forming step of forming the molten glass obtained in the melting step, into a sheet-shaped glass ribbon; and
      an annealing process of annealing the glass ribbon formed in the forming step,
      wherein a drawing amount of the glass ribbon in the forming step is 250 m/h or higher, and
      when a β-OH value ($mm^{-1}$) of an alkali-free glass for a substrate to be produced is represented by W and an average cooling rate (°C/min) of the glass ribbon in a temperature range from (an annealing point of the alkali-free glass for a substrate to be produced in the annealing process +50°C) to 450°C is represented by V, the W and the V are adjusted so as to satisfy the following expression (1):

$$W≤aV+b \qquad (1)$$

(in the expression (1), a and b satisfy the following expressions (2) and (3), respectively:

$$a=-0.0002Y-0.0007 \qquad (2);$$

and

$$b=0.0335Y+0.1894 \qquad (3),$$

in the expressions (2) and (3), 0<Y≤9.

2. The method for producing an alkali-free glass for a substrate according to claim 1, wherein the alkali-free glass for a substrate to be produced comprises, as represented by mass% on the basis of oxides, as a glass matrix composition:

> $SiO_2$: 58% to 66%,
> $Al_2O_3$: 15% to 24%,
> $B_2O_3$: 5% to 12%,
> MgO: 0% to 8%,
> CaO: 0% to 9%,
> SrO: 3% to 12.5%, and
> BaO: 0% to 2%,
> provided that MgO+CaO+SrO+BaO is 9% to 18%.

3. The method for producing an alkali-free glass for a substrate according to claim 1, wherein the alkali-free glass for a substrate to be produced comprises, as represented by mass% on the basis of oxides, as a glass matrix composition:

> $SiO_2$: 50% to 61.5%,
> $Al_2O_3$: 10.5% to 18%,
> $B_2O_3$: 7% to 10%,
> MgO: 2% to 5%,
> CaO: 0% to 14.5%,
> SrO: 0% to 24%, and
> BaO: 0% to 13.5%,
> provided that MgO+CaO+SrO+BaO is 16% to 29.5%.

4. An alkali-free glass for a substrate, which is obtained by the method for producing an alkali-free glass for a substrate according to any one of claims 1 to 3.

Fig. 1

Fig. 2

Fig. 3

<table>
<tr><td colspan="2">**INTERNATIONAL SEARCH REPORT**</td><td colspan="2">International application No.<br>PCT/JP2012/059088</td></tr>
</table>

| | |
|---|---|
| A. CLASSIFICATION OF SUBJECT MATTER<br>*C03B25/04*(2006.01)i, *C03B18/02*(2006.01)i, *C03C3/085*(2006.01)i, *C03C3/087*<br>(2006.01)i, *C03C3/091*(2006.01)i, *C03C3/093*(2006.01)i | |

According to International Patent Classification (IPC) or to both national classification and IPC

| B. FIELDS SEARCHED |
|---|
| Minimum documentation searched (classification system followed by classification symbols)<br>C03B25/04-25/12, C03B18/00-18/22, C03C1/00-14/00 |
| Documentation searched other than minimum documentation to the extent that such documents are included in the fields searched<br>　　Jitsuyo Shinan Koho　　　　　1922-1996　　Jitsuyo Shinan Toroku Koho　　1996-2012<br>　　Kokai Jitsuyo Shinan Koho　　1971-2012　　Toroku Jitsuyo Shinan Koho　　1994-2012 |
| Electronic data base consulted during the international search (name of data base and, where practicable, search terms used)<br>　　INTERGLAD |

| C. | DOCUMENTS CONSIDERED TO BE RELEVANT | |
|---|---|---|
| Category* | Citation of document, with indication, where appropriate, of the relevant passages | Relevant to claim No. |
| Y<br>A | JP 2010-047477 A　(Asahi Glass Co., Ltd.),<br>04 March 2010 (04.03.2010),<br>paragraph [0002]; table 1, example 1<br>(Family: none) | 4<br>1-3 |
| Y<br>A | WO 2010/147189 A1　(Asahi Glass Co., Ltd.),<br>23 December 2010 (23.12.2010),<br>paragraphs [0009], [0072]<br>& TW 201103871 A | 4<br>1-3 |
| Y<br>A | JP 2005-320180 A　(Central Glass Co., Ltd.),<br>17 November 2005 (17.11.2005),<br>paragraphs [0003] to [0010], [0019] to [0021]<br>(Family: none) | 4<br>1-3 |

| ☐ | Further documents are listed in the continuation of Box C. | ☐ | See patent family annex. |
|---|---|---|---|

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search<br>　　02 July, 2012 (02.07.12) | Date of mailing of the international search report<br>　　10 July, 2012 (10.07.12) |
|---|---|
| Name and mailing address of the ISA/<br>　　Japanese Patent Office | Authorized officer |
| Facsimile No. | Telephone No. |

Form PCT/ISA/210 (second sheet) (July 2009)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 9278464 A

- JP 2011086078 A